# EUROPEAN PATENT SPECIFICATION

(11) **EP 1 652 605 B1**
(45) Date of publication and mention of the grant of the patent: **09.06.2010**
(21) Application number: 05256410.1
(22) Date of filing: 14.10.2005
(51) Int. Cl.: B22D 11/12, F16C 13/02, F16C 33/58, F16C 35/04

(54) **Bearing assembly**
Lageranordnung
Ensemble palier

(30) Priority: 27.10.2004 GB 0423862
(43) Date of publication of application: 03.05.2006
(73) Proprietor: Cooper Roller Bearing Company Limited, Norfolk PE30 5JX (GB)
(72) Inventor: Caspall, Martin Janek, King's Lynn Norfolk PE32 2EQ (GB)
(74) Representative: Brookes Batchellor LLP

(56) References cited:
- DE-A1- 1 425 952
- FR-A- 2 057 549
- GB-A- 2 388 166
- US-A- 1 978 707
- US-A1- 2003 021 504

## Description

This invention relates to a roller bearing assembly for use in supporting rolls in steel casting machines.

In continuous casting, molten steel is introduced into a slot leading to a path between two sets of rolls. The rolls are supported by roller bearings generally two end bearings and a central bearing. The bearings are subject to harsh conditions especially when the machine is started or stopped. The process is started by introduction of a solid dummy bar into the slot, to hold back the molten steel as it is introduced. The passage of the dummy bar causes higher than normal loads on the bearings.

British patent application number 2388166 describes a method of controlling loads on the bearing in which a primary housing member, supporting an outer race of the bearing, is relieved internally or externally to an extent to permit flexure of the primary housing component.

An alternative arrangement is desired which is capable of spreading the load more evenly between individual rollers and of increasing the maximum load for the bearing.

Against this background, in accordance with the invention, there is provided a roller bearing assembly for use in supporting rolls in steel casting machines, the assembly including an inner race, an outer race providing a track for rollers in the load zone of the bearing, and a support member for the outer race, wherein the track has, in the load bearing zone, a varying radius of curvature which in the direction of static load is significantly smaller than in directions having a component transverse to the direction of static load, when there is no significant distortion of the support member and, in use, the loads on individual rollers in the bearing are more evenly distributed at peak loads. The track may be or approximate to a half an ellipse in section. The track in a conventional race is cylindrical. Significant variation in the radius causes the load to be more evenly distributed between the rollers and over a greater number of rollers. This enables a greater maximum load to be carried by the bearing and improves conditions during normal running (at less than maximum load) so increasing the fatigue life of the bearing.

The variation in the radius can be produced in different ways. In one, the track has a substantially uniform radius of curvature until assembled in the support member. In another, the radius of curvature varies significantly before the outer race is assembled in the support member.

The invention extends to a steel casting machine in which solidifying molten steel passes between rollers supported by bearing assemblies in accordance with the invention.

One embodiment of the invention will now be described with reference to the accompanying drawings, in which:
Figure 1 shows a schematic view of a continuous steel casting machine embodying the invention;
Figure 2 is a part sectional end view of a bearing assembly of the machine of Figure 1;
Figure 3 is a cross section of the bearing assembly of Figure 2 on arrows III-III;
Figure 4 is a part sectional end view of the bearing housing in the assembly of Figure 2, showing in exaggerated detail variation in the radius of curvature for the seating of the outer race;
Figure 5 is a cross section on arrows V-V of Figure 4;
Figure 6 is a graph showing the loading on each roller at maximum load for a conventional bearing assembly and for a bearing assembly embodying the invention; and
Figure 7 is a graph showing the loading on each roller at normal working load for a conventional bearing assembly and for a bearing assembly embodying the invention.

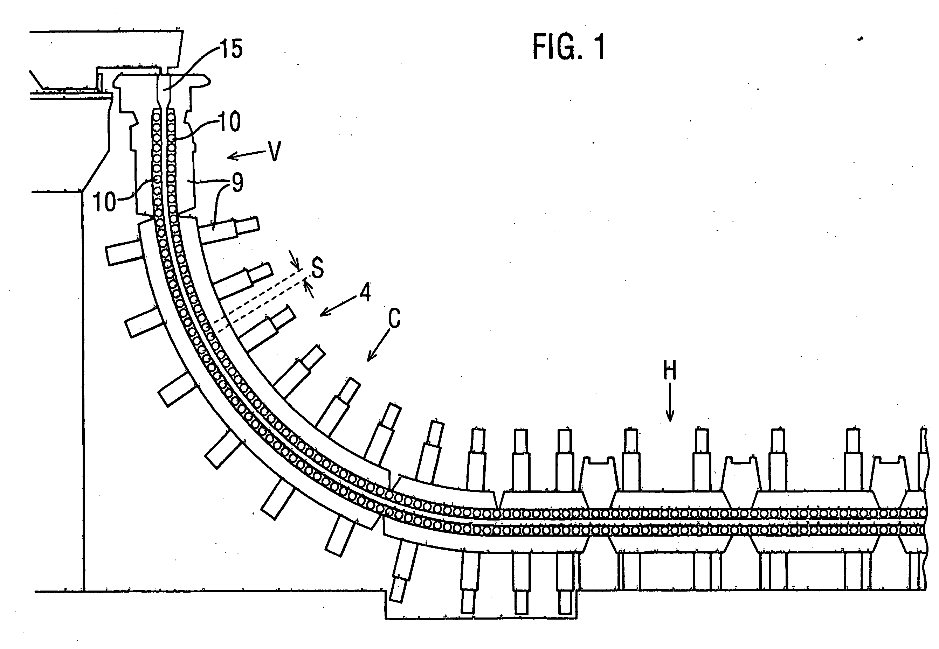

Referring to Figure 1, molten steel is introduced into a slot 15 to pass between roll units 10 supported by roll stands 9. Initially the path is disposed in a vertical path V and then progressively passes through further roll units 10 in a smooth curved path C to enter a horizontal path H. As the molten steel passes through the slot 15 it is sprayed with water by nozzles (not shown) to form an external skin which envelopes the molten steel core. The slab tends to solidify over the horizontal path H of the machine and the continuous slab is finally cut into lengths before further processing.

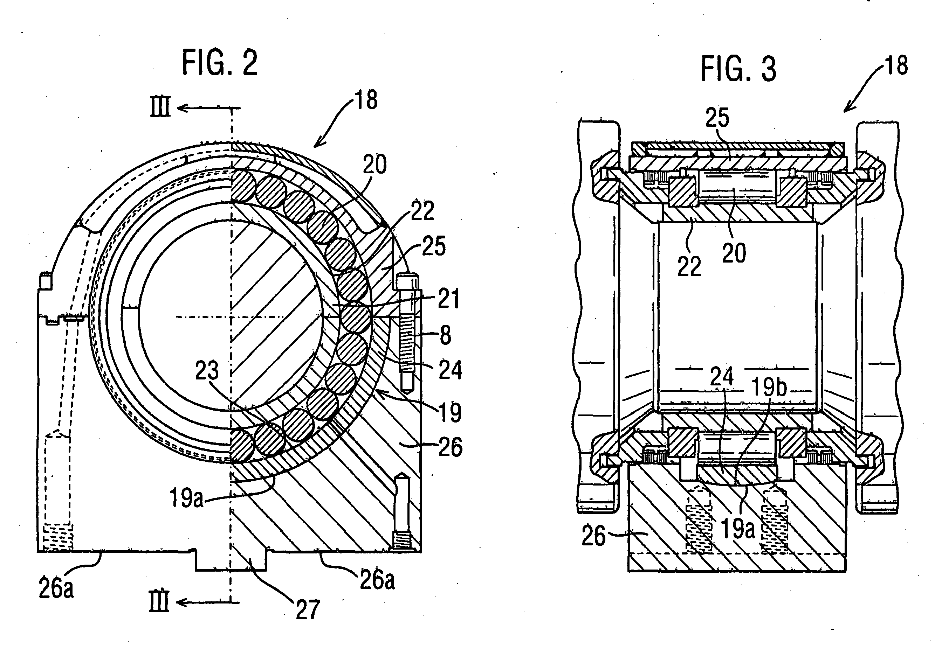

The axes of the rolls in units 10 should be aligned and straight. Spindles are used to support the rolls. The spindles are rotatably mounted on bearing assemblies at the ends and by central bearing assemblies 18 one of which is shown in Figures 2 and 3. The rolls are often formed integrally with the spindles as one integral machined part, requiring the bearing assembly to be split to the shaft.

As shown in Figure 2, the bearing assembly 18 is composed of a split roller bearing 19 with rollers 20 running around an outwardly facing track 22 formed by a split inner race 21. A complementary inwardly facing track 23 is formed on the inner surfaces partly of an outer race 24 in the load bearing zone of the bearing, and partly of a housing cap 25 in the unloaded half of the bearing. The race 24 is supported by a housing or support member 26 which in turn is mounted on a bearing stand, not shown. The support member 26 and the cap 25 are fixed together with bolts 8. The support member 26 is supported by its continuous lower base surfaces 26a on the associated roll stand. There is a substantially planar continuous contact between the support surfaces 26a and the roll stand, not shown. There is an arrangement to locate the bearing assembly on the roll stand. In this embodiment, a projection 27 is received by a recess in the roll stand to position the support thereon. The planar contact ensures the support member does not distort significantly under load. In order to mitigate against misalignment of the bearing the outer surface 19a of the outer race 19 is received by a generally spherical seating 19b in the support member 26.

The bearing assemblies are all subjected to harsh operating conditions during operation of the machine and this is particularly the case with the central bearing assemblies 18. In a typical application the bearing assembly 18 is subjected to heavy dynamic loads as the roll it supports restrains and guides the slab and the assembly 18 can be subjected to temperatures of around 1000°C. It is therefore necessary to cool the bearing assemblies and this is achieved by circulating coolant through the support member 26. It is also necessary to provide lubrication for the rollers 20 and again this is achieved by circulating or introducing lubricant into the support member 26 and thence into the interior of the bearing 19.

Another requirement of the casting machine is the ability to stop and start the casting process. The process is usually started by introducing a solid bar, a so-called "dummy bar", into the slot 15 to hold back the molten steel as it is extruded. The passage of the more rigid solid bar causes high loads on the bearing assemblies particularly over the curved path section C. From time to time the flow of molten steel for the casting process may be interrupted and again as the slab solidifies it has to be removed before the new cast can be introduced. These processes cause peak loads to be imparted to the bearing assemblies.

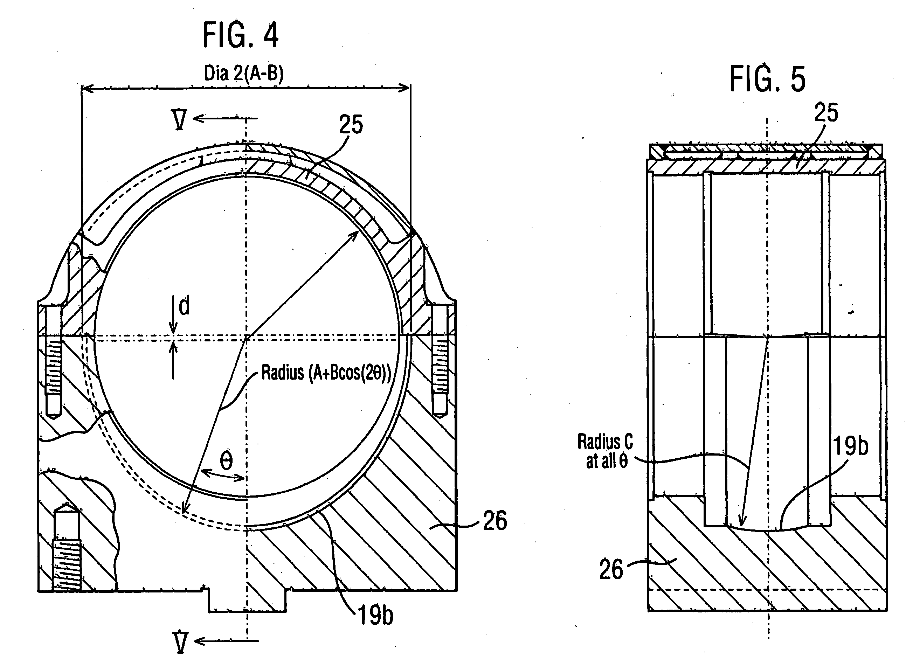

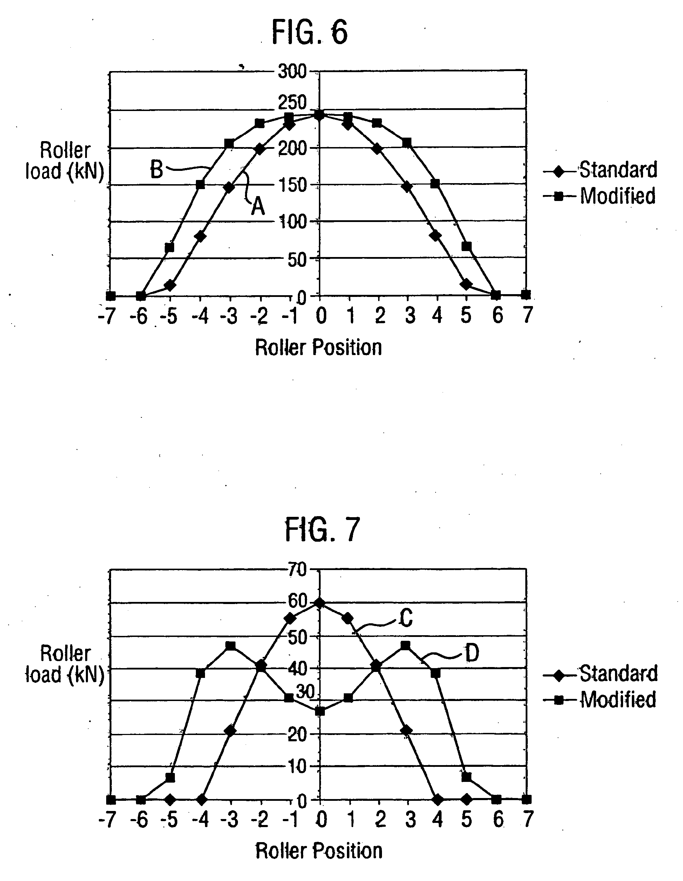

In a conventional bearing assembly, the radius of curvature of the track 23 is constant. This leads to a distribution of the peak loads on individual rollers as shown by curve A in Figure 6. In accordance with the invention, the track 23 has a varying radius of curvature. In the direction of static load the radius is significantly smaller than in directions having a component transverse to the direction of static load, when there is no significant distortion of the support member. In Figure 4, the direction of static load is vertical. In practice the bearing assemblies would be installed so that the direction of static load is at right angles to the path of the slab of steel, for example through the curve C.

The radius of curvature of the track 23 is smaller in the direction of static load (vertical in Figure 4) than it is in directions having a component normal to the direction of static load, e.g. horizontal in Figure 4. Optimally, the track has the form of half an ellipse and the difference in radius of curvature is significant, to produce a distribution of the peak loads on individual rollers as shown by curve B in Figure 6. As may be seen, the loads on individual rollers in the bearing are more evenly distributed. Setting the maximum load on the worst case roller the same as in curve A, results in the total peak load the bearing assembly can support, the sum of the vertical components of the loads on all the rollers in Figure 4, being greater.

Figure 7 shows the loads on individual rollers at normal working load. Here curve C shows the loads resulting from the conventional constant radius track in the outer race. Curve D shows the loads when the track is in the form of the optimal half ellipse which produces the curve B in Figure 6. The load on individual rollers is lower and more evenly distributed. The fatigue life of the bearing is thus increased.

The varying radius track 23 can be produced in different ways. In the arrangement illustrated in Figure 4, the seating 19b has an approximately half elliptical form given in polar co-ordinates by the formula R = A + Bcos2θ. Examples of A and B are A = 125, B = 0.03 mm. At right angles as shown in Figure 5, the seating 19 has an approximately constant radius of curvature of C in the range A-B to A+B. The race 24 is manufactured with constant radius of curvature on its exterior 19a and a constant radius of curvature on its interior to provide the track 23 so that when installed in the seating 19a the track assumes the varying radius of curvature desired. In one example the race can be pressed by hand into the seating. Alternatively, the seating may have a constant radius of curvature and the radius of curvature of the track 23 and/or the outer surface 19a of the race may vary to give the desired variation in the track when the race is installed in the seating.

## Claims

1. A roller bearing assembly for use in supporting rolls in steel casting machines, the assembly including an inner race (21), an outer race (24) providing a track (23) for rollers (20) under load in the bearing, and a support member (26) for the outer race, **characterised in that** the track has, in the load bearing zone, a varying radius of curvature which in the direction of static load is significantly smaller than in directions having a component transverse to the direction of static load, when there is no significant distortion of the support member and, in use, the loads on individual rollers in the bearing are more evenly distributed at peak loads.

2. An assembly as claimed in claim 1, wherein the track (23) has a substantially uniform radius of curvature until assembled in the support member (26).

3. An assembly as claimed in claim 1, wherein the radius of curvature of the track (23) varies significantly before the outer race (24) is assembled in the support member (26).

4. A steel casting machine in which solidifying molten steel passes between rollers supported by bearing assemblies as claimed in any preceding claim.

## Patentansprüche

1. Wälzlagerbaugruppe zur Verwendung beim Lagern von Walzen in Stahlgussmaschinen, wobei die Baugruppe eine innere Laufbahn (21), eine äußere Laufbahn (24), die eine Bahn (23) für Wälzkörper (20) unter Last in dem Lager zur Verfügung stellen, und ein Tragelement (26) für die äußere Laufbahn umfasst, **dadurch gekennzeichnet, dass** die Bahn in der lasttragenden Zone einen variierenden Krümmungsradius aufweist, der in der Richtung der statischen Last wesentlich kleiner als in den Richtungen ist, die eine Komponente quer zu der Richtung der statischen Last aufweisen, wenn es keine wesentliche Verwindung des Tragelementes gibt, und, im Betrieb, die Lasten auf die individuellen Wälzkörper in dem Lager gleichmäßiger an den Belastungsspitzen verteilt werden.

2. Baugruppe, wie in Anspruch 1 beansprucht, wobei die Bahn (23) einen im Wesentlichen gleichförmigen Krümmungsradius aufweist, bis sie in dem Tragelement (26) montiert ist.

3. Baugruppe, wie beansprucht in Anspruch 1, wobei der Krümmungsradius der Bahn (23) wesentlich variiert, bevor die äußere Laufbahn (24) in dem Tragelement (26) montiert wird.

4. Stahlgussmaschine, in welcher sich verfestigender geschmolzener Stahl zwischen Walzen hindurchtritt, die durch Lagerbaugruppen gelagert sind, wie in einem der vorhergehenden Ansprüche beansprucht.

## Revendications

1. Ensemble de palier à rouleaux à utiliser en vue de supporter des rouleaux dans des machines de coulée d'acier, l'ensemble comportant une bague de roulement intérieure (21), une bague de roulement extérieure (24) fournissant une piste (23) pour les rouleaux (20) sous charge dans le palier, et un élément de support (26) pour la bague de roulement extérieure, **caractérisé en ce que** la piste présente dans la zone de palier en charge un rayon de courbure variable, lequel dans la direction de la charge statique est, de façon significative, plus petit que dans les directions qui possèdent une composante transversale à la direction de la charge statique, lorsqu'il n'existe pas de distorsion significative de l'élément de support et que, en fonctionnement, les charges sur les rouleaux individuels du palier sont plus régulièrement réparties au niveau des charges maximales.

2. Ensemble selon la revendication 1, dans lequel la piste (23) présente un rayon de courbure essentiellement uniforme jusqu'à ce qu'elle soit assemblée dans l'élément de support (26).

3. Ensemble selon la revendication 1, dans lequel le rayon de courbure de la piste (23) varie de façon significative avant que la bague de roulement extérieure (24) soit assemblée dans l'élément de support (26).

4. Machine de coulée d'acier dans laquelle de l'acier fondu en cours de solidification passe entre des rouleaux supportés par des ensembles paliers tels que revendiqués dans l'une quelconque des revendications précédentes.
